## Europäisches Patentamt

## European Patent Office

## Office européen des brevets

(19)

(11) Publication number: **0 268 687**
**A1**

(12)

# EUROPEAN PATENT APPLICATION

published in accordance with Art. 158(3) EPC

(21) Application number: **87903405.6**

(22) Date of filing: **16.05.87**

Data of the international application taken as a basis:

(86) International application number:
**PCT/JP87/00308**

(87) International publication number:
**WO87/07411 (03.12.87 87/27)**

(51) Int. Cl.³: **G 06 F 15/66**

(30) Priority: **21.05.86 JP 1163/86**

(43) Date of publication of application:
**01.06.88 Bulletin 88/22**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KURAKAKE, Mitsuo**
**Izumi-Haitsu 103 3-3-10, Tamadaira**
**Hino-shi Tokyo 191(JP)**

(72) Inventor: **OTSUKA, Shoichi**
**4-16-16, Hinodai**
**Hino-shi Tokyo 191(JP)**

(72) Inventor: **MURAOKA, Yutaka**
**Fanuc Utsuki-ryo 386-1, Ishikawa-machi**
**Hachioji-shi Tokyo 192(JP)**

(74) Representative: **Brunner, Michael John et al,**
**GILL JENNINGS & EVERY 53-64 Chancery Lane**
**London WC2A 1HN(GB)**

(54) **SYSTEM FOR SAVING IMAGE DATA.**

(57) System for saving image data to display an image on another image. This system is characterized in that part of an image in a frame memory (5) is temporarily saved in a buffer memory (7) for image operation, and another image data is input to a portion from where said part of an image is removed in the frame memory, and that when said another image is to be erased, said part of an image saved in said buffer memory (7) is restored from said buffer memory back to said frame memory (5). The image data are transferred between the frame memory (5) and the buffer memory (7) according to a microprogram of a CPU (4) for image operation.

EP 0 268 687 A1

./...

Croydon Printing Company Ltd.

Fig.1

- 1 -

# DESCRIPTION

## METHOD OF SAVING IMAGE INFORMATION

### Technical Field

The present invention relates to a method of saving image information for displaying another image on an image.

### Background Art

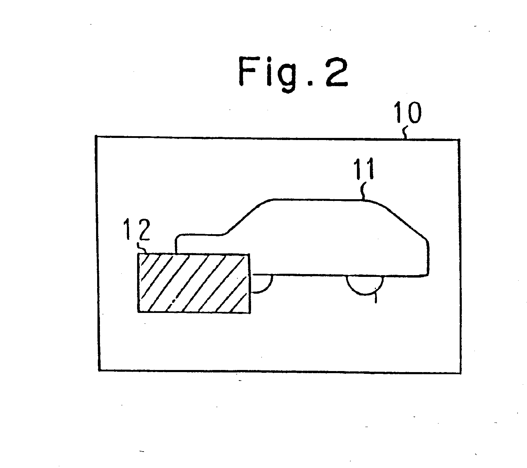

There are many instances where another image is to be displayed on an existing image being displayed. For example, data is displayed on a graphic image or a multiwindow function is executed. One example is shown in FIG. 2 of the accompanying drawings. Denoted in FIG. 2 at 10 is a display screen, 11 a first image, and 12 a second image newly displayed on the first image. Heretofore, it is known to return, to a data memory, part of data, as indicated by a shaded area of the first image, in a frame memory which stores image information, and then to enter image information such as numerical data or the like, to be newly displayed, into the empty area in the frame memory.

In the conventional method, however, a burden is placed on a main CPU since image information is saved in the data memory, and the speed is low because the data memory generally has a slow access time.

Disclosure of the Invention

It is an object of the present invention to provide a method of saving image information, which method will eliminate the above drawbacks and is of high speed and does not place a burden on a main CPU.

To alleviate the aforesaid shortcomings, there is provided according to the present invention a method of saving image information using a frame memory for storing image information and a high-speed buffer memory for processing an image, to display a second image on a first image, the method comprising the steps of:

temporarily saving part of said first image in said frame memory into said buffer memory;

entering information of the second image in an area of the frame memory from which the part of the first mage has been removed; and

returning the part of the first image that has been saved in said buffer memory from the buffer memory to the frame memory when the second image is erased.

With the present invention, data can be transferred at a higher speed between the frame memory and the buffer memory for image processing than between the frame memory and a data memory. Therefore, data transfer can be effected at high speed. The data transfer is controlled by an image processing CPU, not by a main CPU.

Brief Description of the Drawings

FIG. 1 is a block diagram of an embodiment of the present invention;

FIG. 2 is a view explaining the manner in which another image is displayed on an image; and

FIG. 3 is a view showing details for transferring information of a frame memory and an image processing buffer memory.

Best Mode for Carrying Out the Invention

An embodiment of the present invention will hereinafter be described in specific detail with reference to the drawings.

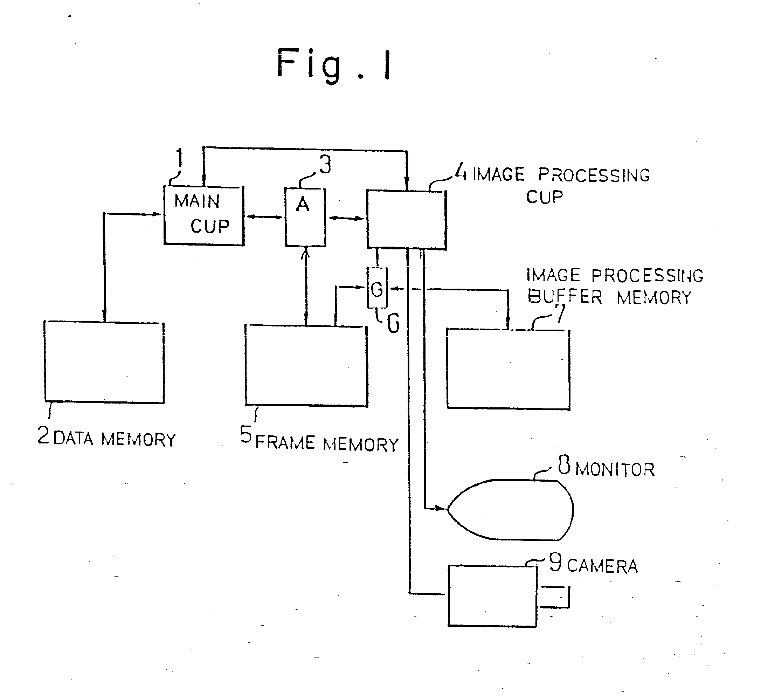

FIG. 1 shows in block form an embodiment of the present invention. Denoted at 1 is a main CPU, 2 a data memory for storing image information and a program, 3 a bus regulating circuit, and 4 an image processing CPU. Also designated at 6 is a gate for controlling data transfer between the frame memory 5 and an image processing buffer memory 7 based on commands from the image processing CPU 4. The image processing buffer memory 7 serves to effect image processing such as sharpening of image data, spatial filtering, and the like. The capacity of the image processing buffer memory 7 is generally smaller than that of the frame memory, and is determined dependent on how the image is processed. A monitor 8 is a display unit for displaying the data stored in the frame memory and generally comprises a CPU display unit. A camera 9 produces a desired image, and generated image information is processed by the image processing CPU 4 and then transferred to the data memory.

Operation will be described below. Desired image information is selected from the data memory 2 by the main CPU 1 and stored in the frame memory 5, and is then displayed on the monitor 8 by the image processing CPU 4. When part of another image is to be displayed on the image being displayed, the main CPU 1 gives a command to the image processing CPU 4 to transfer the part of the image from the frame memory 5 to the image processing buffer memory 7. In response to the command, the image processing CPU 4 opens the gate 6 to save part of the data in the frame memory into the image processing buffer memory 7. Then, the main CPU 1 transfers the part of the other image from the data memory to the empty area of the frame memory 5. As a result, in the frame memory 5, the part of the other image information is put in the part of the previous image information, and the motor 8 displays the other image in overlapping relation to the previous image.

When deleting the other image, the image processing CPU 4 returns the previous image information which has been saved in the image processing buffer memory 7 to the frame memory 5. The data in the frame memory 5 is now representative of the previous image information only, and the monitor 8 displays the previous image only. Data transfer between the frame memory 5 and the image processing buffer memory 7 is faster for image processing than between the data memory 2 and the frame memory 5. Therefore, the previous image information can be called back at high speed.

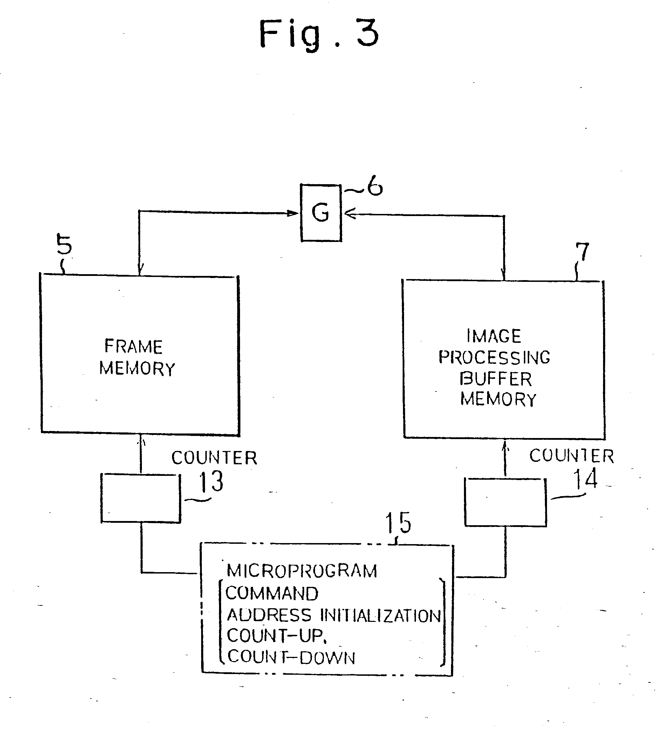

Data transfer between the frame memory 5 and the image processing buffer memory 7 will now be described below. FIG. 3 shows in detail information transfer between the frame memory 5 and the image processing buffer memory 7. Denoted at 5 is the frame memory, 6 the gate, and 7 the image processing buffer memory. The frame memory 5 is associated with a counter 13 for counting up addresses thereof, and the image processing buffer memory 7 is associated with a counter 14 for counting up addresses thereof. These counters 13, 14 are controlled by a microprogram of the image processing CPU 4 shown in FIG. 1. More specifically, when a command is issued from the main CPU 1 for saving part of the data of the frame memory 5 into the image processing buffer memory 7, the image processing CPU 4 sets, in the counter 13, a first address for the data to be saved, and also sets, in the counter 14, a first address for the image processing buffer memory into which the data is to be saved. Each time one byte of data is transferred, the addresses of the counters 13, 14 are counted up. The necesssary data is transferred from the frame memory 5 to the image processing buffer memory 7 in the manner described above. Therefore, the data transfer is entirely processed by the microprogram.

With the present invention, as described above, when displaying another image on an image, previous image information is saved into the image processing buffer memory. The data transfer is effected at high speed, and the burden on the main CPU is reduced.

0263687

- 7 -

CLAIMS

1. A method of saving image information using a frame memory for storing image information and a high-speed buffer memory for processing an image, to display a second image on a first image, the method comprising the steps of:

temporarily saving part of said first image in said frame memory into said buffer memory;

entering information of the second image in an area of the frame memory from which the part of the first mage has been removed; and

returning the part of the first image that has been saved in said buffer memory from the buffer memory to the frame memory when the second image is erased.

2. A method according to claim 1, wherein the part of said first image is temporarily saved into said buffer memory according to a microprogram.

# Fig.1

- 1 MAIN CUP
- 3 A
- 4 IMAGE PROCESSING CUP
- IMAGE PROCESSING BUFFER MEMORY
- 7
- G
- 6
- 2 DATA MEMORY
- 5 FRAME MEMORY
- 8 MONITOR
- 9 CAMERA

# Fig.2

# Fig. 3

# INTERNATIONAL SEARCH REPORT

0268687

International Application No PCT/JP87/00308

## I. CLASSIFICATION OF SUBJECT MATTER (if several classification symbols apply, indicate all) 3

According to International Patent Classification (IPC) or to both National Classification and IPC

Int.Cl⁴    G06F 15/66

## II. FIELDS SEARCHED

Minimum Documentation Searched 4

| Classification System | Classification Symbols |
|---|---|
| IPC | G06F15/62-15/72, G09G1/06, G06F3/14 |

Documentation Searched other than Minimum Documentation
to the Extent that such Documents are Included in the Fields Searched 5

| | |
|---|---|
| Jitsuyo Shinan Koho | 1971 – 1986 |
| Kokai Jitsuyo Shinan Koho | 1971 – 1986 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, A, 56-104380 (Fujitsu Ltd.) 20 August 1981 (20. 08. 81) (Family: none) | 1-2 |
| X | JP, A, 54-108534 (NEC Corporation) 25 August 1979 (25. 08. 79) (Family: none) | 1-2 |
| X | JP, A, 59-52289 (Mitsubishi Electric Corporation) 26 March 1984 (26. 03. 84) (Family: none) | 1-2 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| July 20, 1987 (20. 07. 87) | August 3, 1987 (03. 08. 87) |

| International Searching Authority 1 | Signature of Authorized Officer 20 |
|---|---|
| Japanese Patent Office | |

Form PCT/ISA/210 (second sheet) (October 1977)